# EUROPEAN PATENT APPLICATION

(11) **EP 4 742 434 A2**
(43) Date of publication of application: **13.05.2026**
(21) Application number: 24854248.2
(22) Date of filing: 25.03.2024
(51) Int. Cl.: H01M 50/59, H01M 50/54, H01M 50/105

(54) **BATTERY CELL COMPRISING GUIDE STRUCTURE AND BATTERY MODULE COMPRISING SAME**

(30) Priority: 17.08.2023 KR 20230107477
(71) Applicant: SK On Co., Ltd., Seoul 03161 (KR)
(72) Inventor: RYU, Soo-Jy, Daejeon 34124 (KR)
(74) Representative: Stolmár & Partner Patentanwälte PartG mbB
(86) International application number: PCT/KR2024/003701
(87) International publication number: WO 2025/037694

(57) **Abstract**

Provided according to the present disclosure is a battery cell comprising: an electrode assembly including a current collector; an electrode tab connected to the current collector; and a guide structure disposed between the electrode assembly and the electrode tab. The guide structure may comprise: a first guide structure including a plurality of first slits in which the current collector is accommodated; and a second guide structure disposed between the first guide structure and the electrode tab and including at least one second slit in which the current collector is accommodated.

## Description

### Technical Field

The present disclosure relates to a battery cell including a guide structure and a battery module including the same.

### Background Art

Unlike a primary battery, a secondary battery may be charged with and discharged of electricity, and thus may be applied to devices within various fields such as a digital camera, a mobile phone, a notebook computer, a hybrid vehicle, an electric vehicle, and an energy storage system (ESS). The secondary battery may be a lithium-ion battery, a nickel-cadmium battery, a nickel-metal hydride battery, or a nickel-hydrogen battery.

Secondary batteries may be manufactured as pouch-type battery cells having flexibility or square or cylindrical can-type battery cells having rigidity. A plurality of battery cells may be formed as a cell assembly having a stacked form.

The cell assembly may be disposed inside a case to form a battery module, and a plurality of battery modules may be disposed inside a pack housing to form a battery pack.

### Disclosure of Invention

### Technical Problem

A battery cell may include a plurality of current collectors connected to the electrode composite layer. The plurality of current collectors may be pre-welded with respect to each other and then joined to an electrode tab. However, the current collector may be damaged (e.g., disconnected) due to tension applied to the current collector or bending of the current collector.

According to an aspect of the disclosure, a battery cell including a guide structure capable of reducing deformation (e.g., fracturing and bending) of a current collector of the battery cell may be provided.

A battery cell and a battery module, of the present disclosure, may be widely applied to devices within green technology fields such as an electric vehicle, a battery charging station, and solar power generation, wind power generation, or the like using a battery. In addition, the battery cell and battery module of the present disclosure may be used in eco-friendly electric vehicles, hybrid vehicles, and the like for preventing climate change by suppressing air pollution and greenhouse gas emissions.

### Solution to Problem

A battery cell of the present disclosure may include an electrode assembly including a current collector, an electrode tab connected to the current collector, and a guide structure located between the electrode assembly and the electrode tab. The guide structure may include a first guide structure including a plurality of first slits accommodating the current collector, and a second guide structure located between the first guide structure and the electrode tab, and including at least one second slit accommodating the current collector.

According to an embodiment, the current collector may include a plurality of current collectors connected to the electrode assembly; a plurality of first joining regions to which at least a portion of the plurality of current collectors are joined; and a second joining region extending from the plurality of first joining regions and joined to the electrode tab.

According to an embodiment, the plurality of current collectors may be located in the plurality of first slits. At least a portion of the plurality of first joining regions may be located in the at least one second slit.

According to an embodiment, the first guide structure may include a first surface facing the second guide structure and a second surface opposite to the first surface and facing the electrode assembly. The plurality of first slits may include a first outlet formed in the first surface and having a first width, and a first inlet formed in the second surface and having a second width, greater than the first width.

According to an embodiment, the first guide structure may include a first inclined surface extending from the first surface to the second surface and surrounding the plurality of first slits.

According to an embodiment, the second guide structure may include a third surface, at least a portion of which faces the electrode tab, and a fourth surface opposite to the third surface and facing the first guide structure. The second slit may include a second outlet formed in the third surface and having a third width, and a second inlet formed in the fourth surface and having a fourth width greater than the third width.

According to an embodiment, the second guide structure may include a second inclined surface extending from the third surface to the fourth surface and surrounding the second slit.

According to an embodiment, the fourth width of the second slit may be shorter than or equal to a distance between the plurality of first slits.

According to an embodiment, the plurality of first slits may include a first through-hole and a second through-hole spaced apart from the first through-hole.

According to an embodiment, the guide structure may include at least one of a polymer and ceramic.

According to an embodiment, the first guide structure may be in contact with the second guide structure.

According to an embodiment, the battery cell may further include a pouch accommodating the electrode assembly.

According to an embodiment, the guide structure may be disposed in the pouch.

According to an embodiment, the electrode tab may include a first electrode tab facing in a first direction, and a second electrode tab facing in a second direction, opposite to the first direction. The electrode assembly may include a positive electrode, a negative electrode, and a separator interposed between the positive electrode and the negative electrode. The current collector may include a first current collector connected to the positive electrode and the first electrode tab, and a second current collector connected to the negative electrode and the second electrode tab.

A battery module of the present disclosure may include a plurality of battery cells; and a case accommodating the plurality of battery cells. Each of the plurality of battery cells may include an electrode assembly including a current collector; an electrode tab connected to the current collector; and a guide structure located between the electrode assembly and the electrode tab. The guide structure may include a first guide structure including a plurality of first slits accommodating the current collector; and a second guide structure located between the first guide structure and the electrode tab, and including at least one second slit accommodating the current collector.

### Advantageous Effects of Invention

According to an embodiment of the present disclosure, bending or fracturing of foil of a battery cell may be reduced.

### Brief Description of Drawings

FIG. 1 is a perspective view of a battery cell according to an embodiment.
FIG. 2 is a schematic view illustrating an interior of a battery cell according to an embodiment.
FIG. 3a is a top view of a first guide structure according to an embodiment. FIG. 3b is a rear view of a first guide structure according to an embodiment.
FIG. 4a is a top view of a second guide structure according to an embodiment. FIG. 4b is a rear view of a second guide structure according to an embodiment.
FIG. 5a is a cross-sectional view of a guide structure according to an embodiment. FIG. 5b is a cross-sectional view of a guide structure according to another embodiment.
FIG. 6a is a front view of a guide structure according to an embodiment. FIG. 6b is a rear view of a guide structure according to an embodiment.
FIG. 7 is a perspective view of a battery module according to an embodiment.

### Best Mode for the Invention

Hereinafter, the present disclosure will be described in detail with reference to the accompanying drawings. However, this may be merely an example, and the present disclosure is not limited to the specific embodiments exemplarily described.

The terms or words used in the present specification and claims described below are not limited to a common or dictionary meaning. The inventor will interpret the invention as a meaning and concept consistent with the technical idea of the present disclosure based on the principle that the inventor may appropriately define the concept of a term in order to describe the invention in the best way.

Accordingly, the embodiments described in the present specification and the configurations shown in the drawings may be only the most preferred embodiments of the present disclosure, and do not represent all the technical ideas of the present disclosure, and it will be understood that there may be various equivalents and modified examples that may replace them at the time of filing the present application.

Detailed descriptions of known functions and configurations that may obscure the gist of the present disclosure will be omitted. In the accompanying drawings, some components may be exaggerated, omitted, or schematically illustrated, and the size of each component does not entirely reflect the actual size.

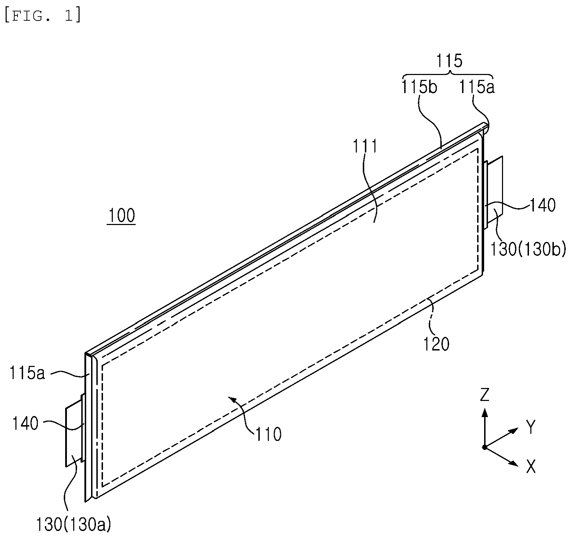

FIG. 1 is a perspective view of a battery cell according to an embodiment.

Referring to FIG. 1, a battery cell (100) may include a pouch (110), an electrode assembly (120), and an electrode tab (130). The battery cell (100) may be a secondary battery. For example, the battery cell (100) may be a lithium-ion battery, but is not limited thereto. For example, the battery cell (100) may be a nickel-cadmium battery, a nickel-metal hydride battery, or a nickel-hydrogen battery, capable of charging and discharging electricity.

The pouch (110) may form at least a portion of an exterior of the battery cell (100). The pouch (110) may include an electrode accommodating portion (111) accommodating the electrode assembly (120), and a sealing portion (115) sealing at least a portion of a periphery of the electrode accommodating portion (111). The electrode accommodating portion (111) may provide a space in which the electrode assembly (120) and an electrolyte are accommodated.

The sealing portion (115) may be formed by joining at least a portion of a periphery of the pouch (110). The sealing portion (115) may be formed in a flange shape extending externally from the electrode accommodating portion (111) formed in a container shape, and may be disposed along at least a portion of an outer periphery of the electrode accommodating portion (111). In an embodiment, the sealing portion (115) may include a first sealing portion (115a) in which the electrode tab (130) is located, and a second sealing portion (115b) in which the electrode tab (130) is not located. A portion of the electrode tab (130) may be drawn out or exposed to an outside of the pouch (110). To increase a degree of sealing of the first sealing portion (115a) at the position where the electrode tab (130) is drawn out, and, at the same time, to secure an electrically insulating state, the electrode tab (130) may be covered by an insulating film (140). The insulating film (140) may be formed of a film material thinner than that of the electrode tab (130), and may be attached to both surfaces of the electrode tab (130).

In an embodiment, the electrode tabs (130) may be disposed on both sides of the battery cell (100) in a length direction (Y-axis direction) to face in opposite directions. For example, the electrode tab (130) may include a first electrode tab (130a) (e.g., a positive electrode tab) of a first polarity (e.g., a positive electrode) facing one side in the length direction of the battery cell (100) and a second electrode tab (130b) (e.g., a negative electrode tab) of a second polarity (e.g., a negative electrode) facing the other side in the length direction of the battery cell (100). In the embodiment illustrated in FIG. 1, the sealing portion (115) may include two first sealing portions 115a in which the electrode tab (130) is disposed, and one second sealing portion (115b) in which the electrode tab (130) is not disposed. In an embodiment, the electrode tab (130) may be referred to as an electrode lead.

A direction in which the electrode tab (130) may be located is selectively designed. In an embodiment (e.g., FIG. 1), the electrode tab (130) may include a first electrode tab (130a) facing in a first direction, and a second electrode tab (130b) located in a direction (e.g., a second direction) opposite to the first electrode tab (130a) with respect to the electrode assembly (120). In FIG. 1, the electrode tabs (130) disposed on both sides of the battery cell (100) in the length direction (e.g., the first direction (Y-axis direction)) to face in opposite directions are illustrated, but a structure of the electrode tabs 130 is not limited thereto. For example, the two electrode tabs 130 may be arranged substantially parallel to each other in the length direction (e.g., the Y-axis direction) of the battery cell (100).

As shown in FIG. 1, the pouch (110) is not limited to a structure in which the sealing portion (115) is formed on three surfaces by folding one sheet of exterior material.

In an embodiment of the present disclosure, at least a portion of the sealing portion (115) may be formed in a folded shape at least once. As at least a portion of the sealing portion (115) is folded, joining reliability of the sealing portion (115) may be improved, and an area of the sealing portion (115) may be minimized. The second sealing portion (115b) of the sealing portion (115) according to an embodiment in which the electrode tab (130) is not disposed may be folded twice and then fixed by an adhesive member (not shown). An angle or the number of times of which the second sealing portion (115b) is bent may be changed. For example, in an embodiment not shown, the second sealing portion (115b) may be folded at an angle of 90° with respect to the first sealing portion (115a).

Those skilled in the art will understand that the electrode assembly (120) may be manufactured using various manners. According to example embodiments, a positive electrode, a negative electrode, and a separator may be repeatedly disposed to form an electrode assembly. In some embodiments, the electrode assembly may be a winding type, a stacking type, a Z-folding type, or a stack-folding type.

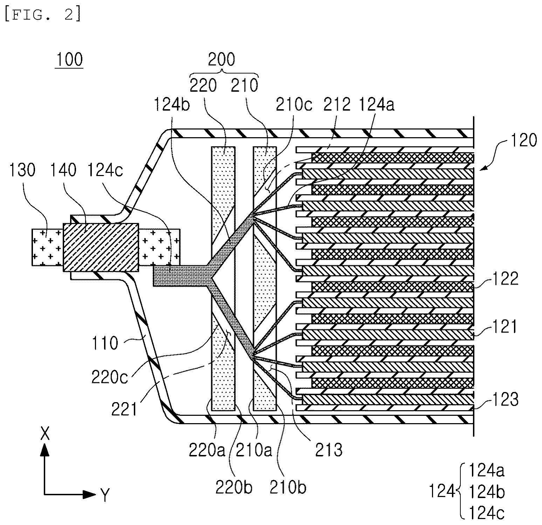

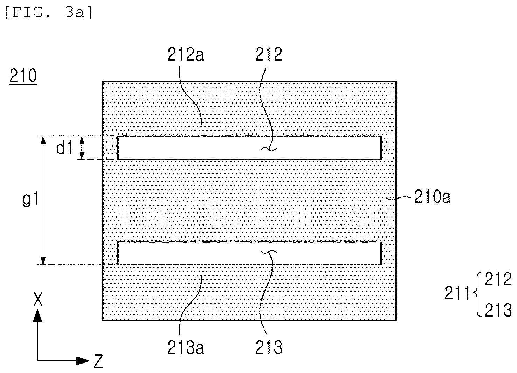

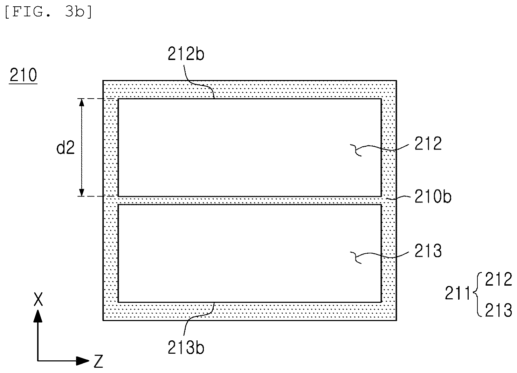

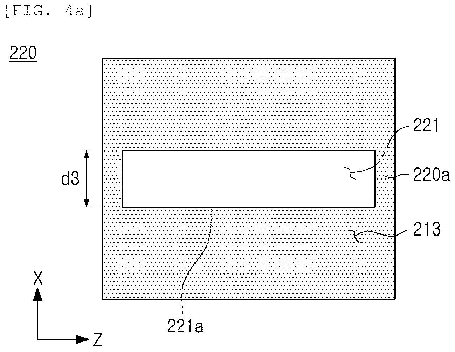

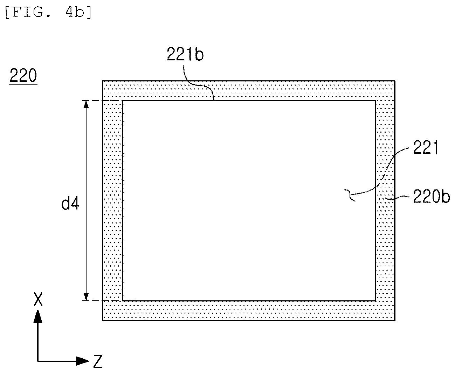

FIG. 2 is a schematic view illustrating an interior of a battery cell according to an embodiment. FIG. 3a is a top view of a first guide structure according to an embodiment. FIG. 3b is a rear view of a first guide structure according to an embodiment. FIG. 4a is a top view of a second guide structure according to an embodiment. FIG. 4b is a rear view of a second guide structure according to an embodiment.

Referring to FIGS. 2, 3a, 3b, 4a, and/or 4b, a battery cell (100) may include a pouch (110), an electrode assembly (120), an electrode tab (130), an insulating film (140), and/or a guide structure (200). Descriptions of the battery cell (100), the pouch (110), the electrode assembly (120), the electrode tab (130), and the insulating film (140) of FIG. 1 may be applied to the battery cell (100), the pouch (110), the electrode assembly (120), the electrode tab (130), and the insulating film (140) of FIG. 2.

The electrode assembly (120) may include a negative electrode (121), a positive electrode (122), and a separator (123) .

The negative electrode (121) may include a negative electrode current collector (e.g., a current collector (124)) and a negative electrode composite layer disposed on at least one surface of the negative electrode current collector. The negative electrode current collector may include a polymer substrate coated with a copper foil, a nickel foil, a stainless steel foil, a titanium foil, a nickel foam, a copper foam, and/or a conductive metal, as non-limiting examples of the negative electrode current collector. The negative electrode composite layer may include a negative electrode active material. A material capable of adsorbing and detaching lithium ions may be used as the negative electrode active material. For example, the negative electrode active material may include a carbon-based material such as crystalline carbon, amorphous carbon, a carbon composite, a carbon fiber, or the like, a lithium metal, a lithium alloy, a silicon (Si)-containing material, and/or a tin (Sn)-containing material.

The positive electrode (122) may include a positive electrode current collector (not shown) and a positive electrode composite layer disposed on at least one surface of the positive electrode current collector. The positive electrode current collector may include stainless steel, nickel, aluminum, titanium, or an alloy thereof. The positive electrode current collector may include aluminum or stainless steel surface-treated with carbon, nickel, titanium, or silver. The positive electrode composite layer may include a positive electrode active material. The positive electrode active material may include a compound capable of reversibly intercalating and deintercalating lithium ions. According to example embodiments, the positive electrode active material may include lithium-nickel metal oxide. The lithium-nickel metal oxide may further include at least one of cobalt (Co), manganese (Mn), or aluminum (Al).

The separator (123) may be interposed between the positive electrode (122) and the negative electrode (121). The separator (123) may be configured to prevent an electrical short between the positive electrode (122) and the negative electrode (121) and to generate a flow of ions.

The electrode assembly (120) may include a current collector (124). In FIG. 2, the current collector (124) is illustrated as a negative current collector of the negative electrode (121), but the current collector (124) of the present disclosure is not limited thereto. For example, in an embodiment not shown, the current collector (124) may be a negative current collector of the negative electrode (121) and/or a positive current collector of the positive electrode (122). In an embodiment, the current collector (124) may include a first current collector connected to the positive electrode (122) and a positive electrode lead (e.g., the first electrode tab (130a) of FIG. 1), and a second current collector connected to the negative electrode (121) and a negative electrode lead (e.g., the second electrode tab (130b) of FIG. 1). In an embodiment, the current collector (124) may be formed of foil. The current collector (124) may include a plurality of current collectors (124a). Each of the plurality of current collectors (124a) may be connected to the positive electrode composite layer or the negative electrode composite layer.

The electrode assembly (120) may be electrically connected to the electrode tab (130). For example, the electrode tab (130) may be joined to the current collector (124) of the electrode assembly (120). End portions of the plurality of current collectors (124a) may be pre-welded and joined to each other. The pre-welded current collector (124) may be joined to the electrode tab (130).

As a thickness (e.g., a length in an X-axis direction) of the electrode assembly (120) increases, tension applied to the current collector (124) may increase, or the current collector (124) may be bent. The current collector (124) may be damaged (e.g., disconnected) due to tension or bending. As a length (e.g., a length in a Y-axis direction) of the current collector (124) increases, tension applied to the current collector (124) may decrease. When the length of the current collector (124) increases, energy density of the battery cell (100) may be reduced.

The battery cell (100) of the present disclosure may include the guide structure (200) for minimizing a decrease in energy density of the battery cell (100) while reducing damage to the current collector (124).

The guide structure (200) may reduce damage or bending of the current collector (124). For example, the guide structure (200) may reduce bending or damage of the current collector (124) by positioning the current collector (124) within a specified point. The guide structure (200) may guide a shape in which the current collector (124) is disposed inside the battery cell (100). For example, the guide structure (200) may have a structure for bringing end portions of the current collector (124) connected to the electrode assembly (120) into close contact with the electrode tab (130). According to an embodiment, the guide structure (200) may include slits (211, 221) for closely contacting the plurality of current collectors (124a). At least a portion of the current collectors (124) may be in close contact with each other by the slits (211, 221). At least a portion of the current collector (124) may be accommodated in the slits (211, 221).

According to an embodiment, the guide structure (200) may include a first guide structure (210) including a first slit (211). The first guide structure (210) may be disposed closer to the electrode assembly (120), as compared to a second guide structure (220).

The first slit (211) may accommodate at least a portion of the plurality of current collectors (124a). At least a portion of the plurality of current collectors (124a) passing through the first slit (211) may be joined to each other. The plurality of current collectors (124a) passing through the first slit (211) and joined to each other may be referred to as a first joining region (124b). In an embodiment, the first joining region (124b) may be referred to as a first pre-welding region.

The first guide structure (210) may have a shape for aligning the plurality of current collectors (124a). For example, the first guide structure (210) may include a first surface (210a) facing the second guide structure (220), and a second surface (210b) opposite to the first surface (210a) and facing the electrode assembly (120). The first slit (211) may be a hole passing through the first surface (210a) and the second surface (210b). The first slit (211) may include a first outlet (212a, 213a) formed in the first surface (210a), and a first inlet (212b, 213b) formed in the second surface (210b).

A size of the first outlet (212a, 213a) may be smaller than a size of the first inlet (212b, 213b). For example, a second width (d2) of one of a plurality of first inlets (212b, 213b) may be greater than a first width (d1) of one of a plurality of first outlets (212a, 213a). The first width (d1) or the second width (d2) may be a length of the battery cell (100) in a thickness direction (e.g., a third direction (X-axis direction)).

According to an embodiment, the first guide structure (210) may have a shape for aligning the plurality of current collectors (124a) to be in close contact with each other. For example, the first guide structure (210) may include a first inclined surface (210c) extending from the first surface (210a) to the second surface (210b) and surrounding the first slit (211). The plurality of current collectors (124a) may extend from the first inlet (212b) to the first outlet (212a) along the first inclined surface (210c). An empty space of the first guide structure (210) surrounded by the first inclined surface (210c) may be referred to as the first slit (211). Both end portions of the first slit (211) may be referred to as the first outlet (212a) and the first inlet (212b), respectively. In an embodiment not shown, at least a portion of the first inclined surface (210c) may include a curved surface.

The first slit (211) may be formed in plural. For example, the first slit (211) may include a first through-hole (212) and a second through-hole (213) spaced apart from the first through-hole (212). The second through-hole (213) may be spaced apart from the first through-hole (212) in the third direction (e.g., the X-axis direction). A portion of the plurality of current collectors (214b) may be accommodated in the first through-hole (212), and another portion of the plurality of current collectors (214b) may be accommodated in the second through-hole (213). A description of the first slit (211) may be applied to the first through-hole (212) and the second through-hole (213). Although a structure in which the first slit (211) includes two through-holes (212, 213) is illustrated herein, this may be an example. For example, the number of through-holes (212, 213) may be selectively designed according to a size of the battery cell (100).

According to an embodiment, the guide structure (200) may include a second guide structure (220) including a second slit (221). The second guide structure (220) may be located between the first guide structure (210) and the electrode tab (130).

The second slit (221) may accommodate at least a portion (e.g., the first joining region (124b)) of the current collector (124). The first joining regions (124b) passing through the second slit (221) may be joined to each other. A plurality of first joining regions (124b) passing through the second slit (221) and joined to each other may be referred to as a second joining region (124c). The second joining region (124c) may be joined to the electrode tab (130). In an embodiment, the second joining region (124c) may be referred to as a second pre-welding region.

The second guide structure (220) may have a shape for aligning the current collector (124) (e.g., the first joining region (124b)). For example, the second guide structure (220) may include a third surface (220a) of which at least a portion faces the electrode tab (130), and a fourth surface (220b) opposite to the fourth surface (220a) and facing the first guide structure (210).

The second slit (221) may be a hole passing through the third surface (220a) and the fourth surface (220b). The second slit (221) may include a second outlet (221a) formed in the third surface (220a), and a second inlet (221b) formed in the fourth surface (220b). A size of the second outlet (221a) may be smaller than a size of the second inlet (221b). For example, a third width (d3) of the second outlet (221a) may be smaller than a fourth width (d4) of the second inlet (221b). The third width (d3) or the fourth width (d4) may be a length of the battery cell (100) in the thickness direction (e.g., the third direction (X-axis direction)).

According to an embodiment, the second guide structure (220) may have a shape for closely aligning the current collectors (124) (e.g., the first joining regions (124b)). For example, the second guide structure (220) may include a second inclined surface (220c) extending from the third surface (220a) to the fourth surface (220b) and surrounding the second slit (221). The first joining region (124b) may extend from the second inlet (221b) to the second inlet (221a) along the second inclined surface (220c). The inner empty space of the second guide structure (220) surrounded by the second inclined surface (220c) may be referred to as a second slit (221). Both ends of the second slit (221) may be referred to as the second outlet (221a) and the first inlet (221b), respectively. In an embodiment not shown, at least a portion of the first inclined surface (210c) may include a curved surface.

According to an embodiment, the number of the second slits (221) may be equal to or less than the number of the first slits (211). For example, in an embodiment, the second slit (221) may be formed in singular.

According to an embodiment, the second inlet (221b) of the second slit (221) may accommodate the current collector (124) passing through the first slit (211). In an embodiment, a length of the fourth width (d4) of the second slit (221) may be less than or equal to a distance between the plurality of first slits (211) (e.g., a first gap (g1) between the first through-hole (212) and the second through-hole (213)).

According to an embodiment, the guide structure (200) may be formed of a non-conductive material. For example, the guide structure (200) may include a polymer and/or ceramic.

According to an embodiment, the guide structure (200) may include a polymer film or a nonwoven fabric. In an embodiment, the guide structure (200) may include a polyolefin-based polymer such as an ethylene polymer, a propylene polymer, an ethylene/butene copolymer, an ethylene/hexene copolymer, an ethylene/methacrylate copolymer, or the like. In an embodiment, the guide structure (200) may include a high melting point glass fiber, a polyethylene terephthalate fiber, and/or ceramic.

In the disclosure, a structure in which the guide structure (200) includes two guide structures (e.g., the first guide structure (210) and the second guide structure (220)) is illustrated, but this is illustrative. For example, the guide structure (200) may include three or more guide structures. As another example, the guide structure (200) may be implemented as one guide structure (200) including a plurality of holes.

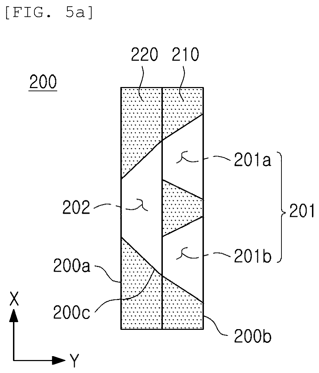

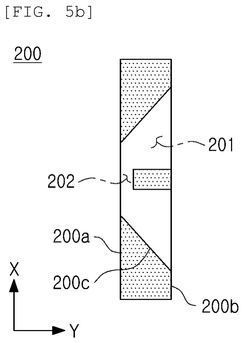

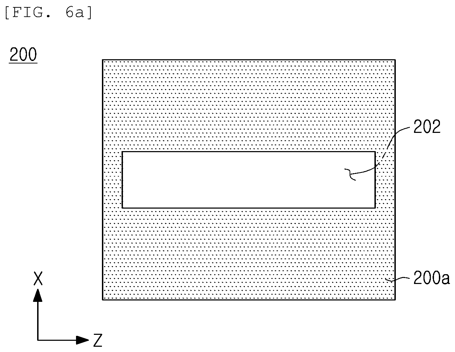

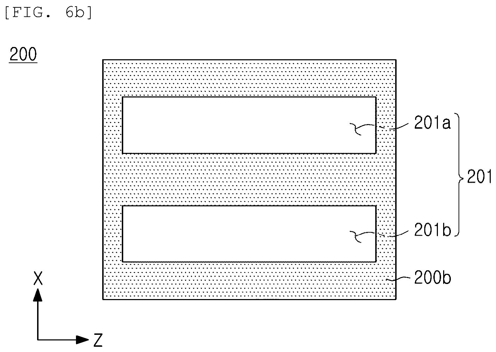

FIG. 5a is a cross-sectional view of a guide structure according to an embodiment. FIG. 5b is a cross-sectional view of a guide structure according to another embodiment. FIG. 6a is a front view of a guide structure according to an embodiment. FIG. 6b is a rear view of a guide structure according to an embodiment.

Referring to FIGS. 5a, 5b, 6a, and/or 6b, a guide structure (200) may include a first guide hole (201) formed in a rear surface (200b) and a second guide hole (202) formed in a front surface (200a). A current collector (e.g., the current collector (124) of FIG. 2) passing through the first guide hole (201) may pass through the second guide hole (202) and be joined to an electrode tab (e.g., the electrode tab (130) of FIG. 2). At least a portion of the description of the guide structure (200) of FIGS. 2, 3a, 3b, 4a, and/or 4b may be applied to the guide structure (200) of FIGS. 5a, 5b, 6a, and/or 6b. For example, the configuration of the first guide hole (201) and the second guide hole (202) of FIGS. 5a, 5b, 6a, and/or 6b may be all or partially the same as the configuration of the first slit (211) and the second slit (221) of FIGS. 2, 3a, 3b, 4a, and/or 4b.

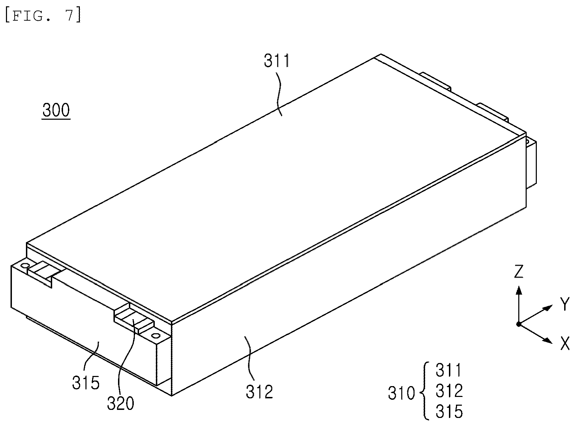

According to an embodiment (e.g., FIGS. 5a, 6a, and 6b), the guide structure (200) may include a first guide structure (210) and a second guide structure (220) contacting the first guide structure (210). The first guide structure (210) may include the first guide hole (201). According to an embodiment, the first guide hole (201) may include a 1-1 guide hole (201a) and a 1-2 guide hole (201b) spaced apart from the 1-1 guide hole (201a). The second guide structure (220) may include the second guide hole (202). The current collector (e.g., the current collector (124) of FIG. 2) passing through the first guide hole (201) may pass through the second guide hole (202) and be exposed to an outside of the guide structure (200). According to an embodiment, the first guide structure (210) and the second guide structure (220) may be in contact with each other while a gap therebetween may be reduced in a degassing process of a battery cell (e.g., the battery cell (100) of FIG. 1). As a distance between the first guide structure (210) and the second guide structure (220) may be reduced, a size of a terrace of the battery module (e.g., the battery module (300) of FIG. 7) may be reduced, and energy density of the battery module (300) may increase. As another example, first guide structures (210) may be connected to each other using an adhesive member (e.g., an adhesive tape and/or an adhesive).

According to an embodiment (e.g., FIGS. 5b, 6a, and 6b), the guide structure (200) may be integrally formed. For example, the guide structure (200) may include the second guide hole (202) formed in the front surface (200a) and the first guide hole (201) formed in the rear surface (200b). The first guide hole (201) and the second guide hole (202) may have a connected shape. For example, the first guide hole (201) and the second guide hole (202) may mean respective portions of one through-hole. In an embodiment, the number and/or sizes of the first guide holes (201) may be smaller than the number and/or sizes of the second guide holes (202).

FIG. 7 is a perspective view of a battery module according to an embodiment.

Referring to FIG. 7, a battery module (300) may include a case (310) accommodating a plurality of battery cells (e.g., the battery cells (100) of FIG. 2), and a busbar assembly (320).

The battery module (300) may include a cell assembly (not shown) including a plurality of battery cells (100). The cell assembly may have a substantially hexahedral shape. In an embodiment, the cell assembly (101) may be referred to as a cell stack.

The case (310) may form at least a portion of an exterior of the battery module (300), and may form an accommodation space accommodating the plurality of battery cells (100). For example, the case (310) may include a cover (311) covering the plurality of battery cells (100), and an accommodation portion (312) surrounding lower and side surfaces of the plurality of battery cells (100). In an embodiment, the cover (311) may be referred to as an upper cover.

The case (310) may include an end plate (315) covering a portion of the side surfaces of the plurality of battery cells (100). In an embodiment, the end plate (315) may be connected to an end portion of the accommodation portion (312) in a length direction (e.g., the Y-axis direction). The end plate (315) may cover a portion of a side surface of the cell assembly (101) and at least a portion of the busbar assembly (320).

According to an embodiment, the case (310) may be formed of a material having high thermal conductivity, such as metal. For example, the case (310) may be formed of aluminum. The material of the case (310) is not limited thereto. According to another embodiment, the case (310) may be formed of a polymer. The case (310) may be referred to as a housing, a module housing, or a module case.

The busbar assembly (320) may include an internal busbar of electrical conductivity electrically connected to an electrode tab (e.g., the electrode tab (130) of FIG. 1) of the battery cell (100), and a busbar frame supporting the internal busbar. The busbar assembly (320) may include at least one terminal busbar for electrical connection with an outside. The electrode tab (130) of the battery cell (100) may be electrically connected to an outside of the battery module (300) through the internal busbar and the terminal busbar. For example, the terminal busbar of the busbar assembly (320) may be exposed to an outside of the case (310) through a hole of the end plate (315). For convenience of explanation, some components may be omitted or exaggerated in this document.

The above-described content may be merely an example of applying the principles of the present disclosure, and other configurations may be further included within the scope of the present disclosure.

Although the embodiments of the present disclosure have been described above, the scope of the present disclosure is not limited thereto, and it will be obvious to a person skilled in the art that various modifications and modifications are possible within the scope without departing from the technical spirit of the present disclosure described in the claims. For example, the present disclosure may be implemented by removing some components in the above-described embodiments, and each embodiment may be implemented in combination with each other.

## Claims

1. A battery cell comprising:
an electrode assembly including a current collector;
an electrode tab connected to the current collector; and
a guide structure located between the electrode assembly and the electrode tab,
wherein the guide structure includes:
a first guide structure including a plurality of first slits accommodating the current collector; and
a second guide structure located between the first guide structure and the electrode tab, and including at least one second slit accommodating the current collector.

2. The battery cell of claim 1, wherein the current collector includes:
a plurality of current collectors connected to the electrode assembly;
a plurality of first joining regions to which at least a portion of the plurality of current collectors is joined; and
a second joining region extending from the plurality of first joining regions and joined to the electrode tab.

3. The battery cell of claim 2, wherein the plurality of current collectors are located in the plurality of first slits, and
at least a portion of the plurality of first joining regions is located in the at least one second slit.

4. The battery cell of claim 1, wherein the first guide structure includes a first surface facing the second guide structure and a second surface opposite to the first surface and facing the electrode assembly, and
the plurality of first slits include a first outlet formed in the first surface and having a first width, and a first inlet formed in the second surface and having a second width, greater than the first width.

5. The battery cell of claim 4, wherein the first guide structure includes a first inclined surface extending from the first surface to the second surface and surrounding the plurality of first slits.

6. The battery cell of claim 1, wherein the second guide structure includes a third surface, at least a portion of which faces the electrode tab, and a fourth surface opposite to the third surface and facing the first guide structure, and
the second slit includes a second outlet formed in the third surface and having a third width, and a second inlet formed in the fourth surface and having a fourth width greater than the third width.

7. The battery cell of claim 6, wherein the second guide structure includes a second inclined surface extending from the third surface to the fourth surface and surrounding the second slit.

8. The battery cell of claim 6, wherein the fourth width of the second slit is shorter than or equal to a distance between the plurality of first slits.

9. The battery cell of claim 1, wherein the plurality of first slits include a first through-hole and a second through-hole spaced apart from the first through-hole.

10. The battery cell of claim 1, wherein the guide structure includes at least one of a polymer and ceramic.

11. The battery cell of claim 1, wherein the first guide structure is in contact with the second guide structure.

12. The battery cell of claim 1, further including a pouch accommodating the electrode assembly.

13. The battery cell of claim 12, wherein the guide structure is disposed in the pouch.

14. The battery cell of claim 12, wherein the electrode tab includes a first electrode tab facing in a first direction, and a second electrode tab facing in a second direction, opposite to the first direction,
the electrode assembly includes a positive electrode, a negative electrode, and a separator interposed between the positive electrode and the negative electrode, and
the current collector includes a first current collector connected to the positive electrode and the first electrode tab, and a second current collector connected to the negative electrode and the second electrode tab.

15. A battery module comprising:
a plurality of battery cells; and
a case accommodating the plurality of battery cells,
wherein each of the plurality of battery cells includes:
an electrode assembly including a current collector;
an electrode tab connected to the current collector; and
a guide structure located between the electrode assembly and the electrode tab,
wherein the guide structure includes:
a first guide structure including a plurality of first slits accommodating the current collector; and
a second guide structure located between the first guide structure and the electrode tab, and including at least one second slit accommodating the current collector.
